# FASCICULE DE BREVET EUROPEEN

(11) **EP 3 542 148 B1**
(45) Date de publication et mention de la délivrance du brevet: **13.09.2023**
(21) Numéro de dépôt: 17804503.5
(22) Date de dépôt: 17.11.2017
(51) Int. Cl.: G01N 21/3563, G01N 21/55, G01N 21/84

(54) **DISPOSITIF PORTATIF ET PROCÉDÉ D'ESTIMATION D'UN PARAMÈTRE D'UN MATÉRIAU POLYMÈRE**
TRAGBARE VORRICHTUNG UND VERFAHREN ZUR SCHÄTZUNG EINES PARAMETERS EINES POLYMERS
PORTABLE DEVICE AND METHOD FOR ESTIMATING A PARAMETER OF A POLYMER

(30) Priorité: 18.11.2016 FR 1661235
(43) Date de publication de la demande: 25.09.2019
(73) Titulaire: Electricité de France, 75008 Paris (FR); Sorbonne Université, 75006 Paris (FR)
(72) Inventeur: RIBES CORTES, Alejandro, 75013 Paris (FR); BEN CHOUIKHA, Mohamed, 93300 Aubervilliers (FR)
(74) Mandataire: Regimbeau
(86) Numéro de dépôt international: PCT/EP2017/079543
(87) Numéro de publication internationale: WO 2018/091631

(56) Documents cités:
- EP-A2- 2 138 830
- DE-A1- 19 506 550
- US-A- 5 962 853
- US-A1- 2004 195 511
- US-A1- 2005 067 569
- US-A1- 2016 178 528
- US-B1- 6 172 743
- US-B1- 6 818 892

## Description

L'invention concerne un dispositif d'estimation d'un paramètre d'un matériau polymère.

Un domaine d'application de l'invention concerne les polymères servant au revêtement de parois ou de tuyauteries, notamment dans les centrales nucléaires de production d'électricité.

Le document US 2005/0067569 A1 concerne un procédé pour déterminer un degré d'exposition à la chaleur d'un substrat composite résine-fibre, utilisant une source infrarouge multi-fréquences ou une source infrarouge large bande envoyant un faisceau vers le substrat, et un détecteur infrarouge comportant un spectromètre à filtre infrarouge détectant l'énergie infrarouge refléchie par le substrat et passée par le filtre, pour déterminer une valeur d'énergie infrarouge réfléchie par le substrat composite et de là établir une corrélation de la valeur d'énergie infrarouge réfléchie avec le degré d'exposition à la chaleur.

Le document EP2138830 A2 concerne un procédé pour déterminer le degré de dégradation ultraviolette d'une surface de polymère, dans lequel la surface est irradiée par un spectre sur une plage de longueur d'onde de 2.5 µm à 16.7 µm et prévoyant de collecter par un spectromètre le spectre réfléchi par la surface.

Le document US 2004/0195511 A1 décrit un dispositif pour déterminer le spectre infrarouge d'échantillons, ayant une source infrarouge large bande, formée par des lampes au tungstène, la lumière du soleil, un émetteur infrarouge à fenêtre ZnSe, une source du proche infrarouge, et idéalement une source infrarouge ayant une intensité plate ou uniforme à travers le spectre infrarouge, et un spectromètre pour analyser la lumière reçue par un détecteur infrarouge.

Le document US 2016/0178528 A1 concerne un dispositif comportant une source de lumière pouvant être dans l'infrarouge proche, l'infrarouge moyen ou la lumière visible, et un détecteur pour détecter la réflexion spéculaire d'un article de test sur lequel est envoyée le rayonnement incident de la source, la source pouvant être des diodes électroluminescentes ou des sources laser.

La présente invention concerne la mesure d'un ou plusieurs paramètres sur des matériaux pouvant être, d'une manière non limitative :
- Les revêtements polymères, typiquement les peintures constituant les peintures,
- Les composants en polymère comme par exemple des conduites de transport de fluide,
- Les câbles électriques.

On trouve de telles peintures ou composants dans le milieu industriel, par exemple les sites nucléaires de production d'électricité où on rencontre des conditions de températures et d'humidité sévères auxquelles ces peintures et composants doivent résister. Dans le référentiel de sûreté applicable aux centrales nucléaires, il est requis que les propriétés d'étanchéité des revêtements des surfaces telles que les peintures en polymère appliquées sur les parois intérieures du béton formant les enceintes des bâtiments réacteurs, résistent à des conditions sévères de température et humidité. Le décollement ou l'arrachage de tels revêtements peut conduire à encombrer et colmater le circuit d'aspersion de secours connu sous le sigle AES injectant de l'eau par aspersion en gouttelettes à l'intérieur de l'enceinte du bâtiment réacteur lors par exemple d'essais de fonctionnement ou en cas d'accident ayant conduit à une libération d'eau chaude entraînant une augmentation importante de la pression et de la température à l'intérieur de l'enceinte à l'origine de l'arrachage des revêtements, situation pour laquelle le système de secours AES est dimensionné.

Ces exigences concernent de façon plus générale tous les matériaux à base de polymère, par exemple les tubes ou conduites dits haute densité en polymère, où les fluides circulants peuvent être à hautes températures. Ici le contrôle pertinent doit se faire sur la surface intérieure dudit tube. Un autre exemple où une surveillance est requise est celui des câbles électriques, de composition polymère également, où la dégradation est synonyme de perte d'isolation électrique.

Les exigences selon le référentiel réglementaire et de sûreté propre à chaque industrie imposent que l'exploitant surveille l'état des revêtements de surface, tels les peintures et de certains composants comme les conduites et les câbles. Dès lors qu'ils sont de structure polymère, une méthode de contrôle adaptée doit être mise en oeuvre.

Dans le cas par exemple des revêtements appliqués en centrale nucléaire, sur les parois interne des bâtiments des centrales nucléaires devant assurer une fonction d'étanchéité, il est bien connu que des contrôles visuels ne permettent pas d'estimer comme paramètre un état réel du vieillissement comme par exemple des craquelures ou boursoufflures, au regard du critère recherché. En effet, soit des craquelures ou boursoufflures apparaissent et le diagnostic de dégradation avancée est immédiatement prononcé, soit aucun de ces symptômes n'apparaît et l'opérateur ne peut se prononcer. Même si aucune dégradation n'est visible à l'oeil nu, il se peut que celle-ci ait déjà pris naissance au sein de la microstructure de la fine couche du revêtement, signe d'une détérioration, synonyme d'une perte des caractéristiques de protection telle l'étanchéité. Dans ces conditions, il est démontré que le revêtement, bien que d'apparence sain, ne résistera pas à l'épreuve d'un transitoire important de température et d'humidité, qui peut décoller les revêtements appliqués pour de plus constituer des déchets pénalisants pour l'exploitant.

L'enjeu est donc d'anticiper de telles situations grâce à l'évaluation pertinente d'un état de vieillissement, avant même l'apparition des premières fragilisations.

Ainsi, l'exploitant recherche une méthode de mesure des dégradations, qui anticipe les besoins de maintenance au regard de critères de dégradation préalablement définis et d'un programme de maintenance préalablement fixé.

Il est connu, pour le contrôle des revêtements, de réaliser des briquettes témoins pendant la phase de réalisation des peintures. Les briquettes témoins sont peintes par le revêtement polymère, puis conservées dans des armoires à l'intérieur du bâtiment concerné. Cette méthode se base sur l'hypothèse que le vieillissement des briquettes sera représentatif du vieillissement des revêtements de protection. De manière programmée les briquettes témoins sont contrôlées dans un laboratoire d'analyse. Cela implique un transport régulier (aller-retour) des briquettes témoins entre leur emplacement de conservation et le laboratoire d'analyse. Plusieurs inconvénients sont rencontrés :
Les briquettes sont parfois perdues ou endommagées durant le transport. Un carottage dans le béton d'une paroi par exemple d'un bâtiment de centrale nucléaire est alors nécessaire pour remplacer les briquettes témoins. Cette opération nécessite des actions de maintenance assez lourdes car les trous créés par les carottages doivent être rebouchés et repeints.

L'état de vieillissement du revêtement des briquettes n'est pas totalement représentatif de celui de l'ensemble du bâtiment.

Par ailleurs, un autre problème peut être de devoir contrôler qu'un polymère déterminé est bien présent. Par exemple, dans l'environnement indiqué ci-dessus, on peut souhaiter contrôler que le produit formant par exemple un joint est bien constitué d'un matériau polymère spécifié dans un cahier des charges, dans des bâtiments de réacteurs dans l'environnement indiqué ci-dessus ou dans d'autres environnements, et plus généralement d'autres bâtiments à caractère industriel dans des environnements aussi variés.

La présente invention vise à pallier les inconvénients de l'état de la technique et à résoudre le problème indiqué ci-dessus pour permettre d'estimer un paramètre d'un matériau polymère par un dispositif et un procédé devant être simples à mettre en oeuvre et adaptés pour détecter d'une manière systématique un traceur de vieillissement du matériau polymère.

A cet effet, un premier objet de l'invention est un dispositif portatif d'estimation d'au moins un paramètre caractéristique d'un matériau polymère suivant la revendication 1.

Les valeurs de longueur d'onde et de nombre d'ondes sélectionnées, sont celles qui ont été déterminées par les inventeurs comme correspondant à la détection d'un traceur de vieillissement du matériau polymère par l'émission d'une raie dont le maximum d'énergie est localisé en l'une de ces valeurs.

L'invention permet ainsi permet ainsi de déterminer un paramètre du polymère dépendant de la détection du traceur de vieillissement, et ce à l'aide d'un dispositif portatif, qui est simple de mise en oeuvre.

Le dispositif suivant l'invention évite ainsi d'irradier le matériau polymère par l'ensemble des longueurs d'onde du spectre infrarouge, mais l'irradie par seulement une raie d'intérêt localisée en deux ou plusieurs des longueurs d'onde ou nombres d'onde précités, en évitant ainsi de devoir sélectionner par un spectromètre une ou plusieurs longueurs d'onde reçues par le détecteur infrarouge.

Les revendicatins 2 à 20 concernent des modes de réalisation du dispositif suivant l'invention. Suivant un mode de réalisation, chaque source infrarouge est apte à émettre vers le matériau polymère une unique raie spectrale, indiquée ci-dessus. Ci-dessous, le rayonnement infrarouge, ayant été réfléchi par le matériau polymère et ayant été reçu par le détecteur infrarouge en réponse à l'émission de la ou des raie spectrale(s) précitée(s) par la ou les source(s) infrarouge(s) est également appelé deuxième rayonnement infrarouge.

Un deuxième objet de l'invention est un procédé d'estimation d'au moins un paramètre caractéristique d'un matériau polymère suivant la revendication 21.

L'invention sera mieux comprise à la lecture de la description qui va suivre, donnée uniquement à titre d'exemple non limitatif en référence aux dessins annexés, sur lesquels :

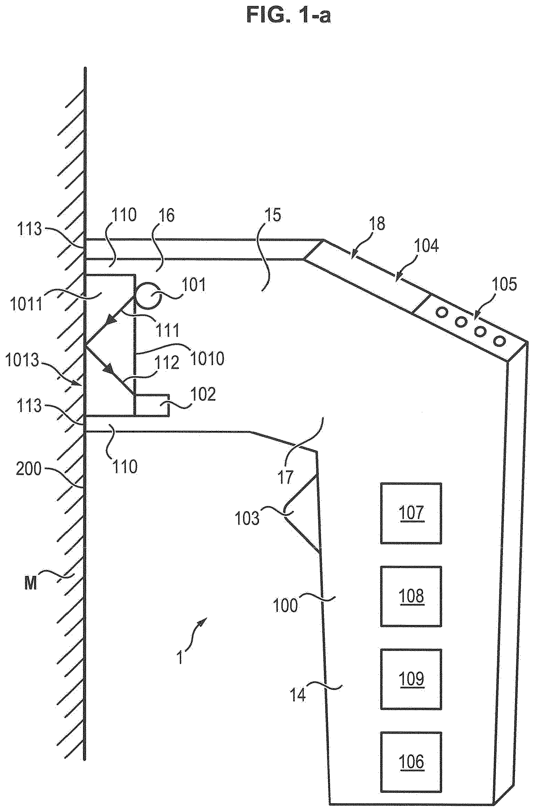

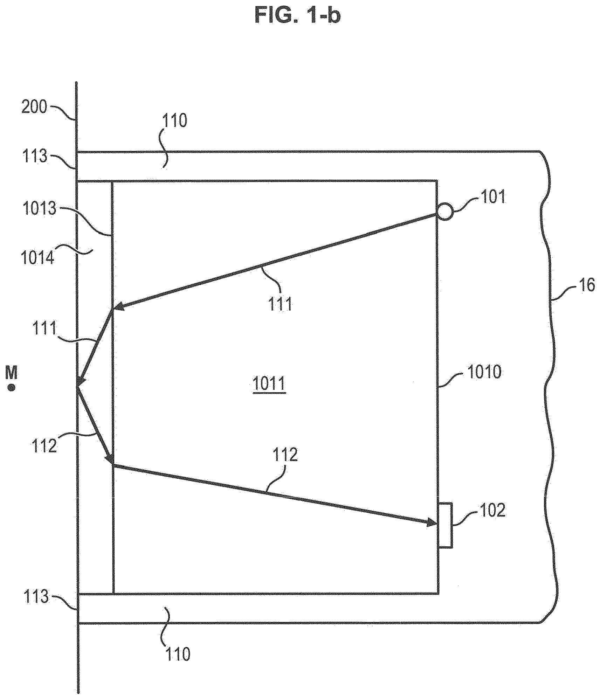

- la figure 1-a représente un synoptique modulaire général du dispositif d'estimation suivant un mode de réalisation de l'invention,
- la figure 1-b représente une partie du dispositif d'estimation suivant un mode de réalisation de l'invention,
- la figure 2 est un synoptique modulaire d'une partie d'acquisition des mesures du dispositif d'estimation suivant un mode de réalisation de l'invention,
- la figure 3 représente les variations de la réflectance spectrale infrarouge d'un polymère, en fonction de l'inverse de la longueur d'onde en abscisses,
- la figure 4 représente un chronogramme d'un signal de commande d'une source infrarouge du dispositif d'estimation suivant un mode de réalisation de l'invention,
- la figure 5 représente un chronogramme de mesures effectuées par le détecteur infrarouge du dispositif d'estimation suivant un mode de réalisation de l'invention,
- la figure 6 est un synoptique modulaire du dispositif d'estimation suivant un mode de réalisation de l'invention.

On décrit ci-dessous des modes de réalisation du dispositif 1 d'estimation d'un paramètre d'un matériau polymère M et d'un procédé d'estimation d'un paramètre d'un matériau polymère M mis en oeuvre à l'aide de ce dispositif 1. Ce paramètre peut être la présence d'au moins un traceur de vieillissement et/ou la teneur d'au moins un traceur de vieillissement et/ou l'identification du matériau polymère M.

Aux figures, le dispositif 1 d'estimation du paramètre comporte plusieurs sources infrarouges 101, un ou plusieurs détecteur(s) infrarouge(s) 102 et une unité 2 de détermination du paramètre.

D'une manière générale, suivant l'invention, les sources infrarouges 101 envoient vers le matériau polymère M un premier rayonnement infrarouge 111 ayant plusieurs raies spectrales d'émission de longueurs d'onde prescrites, correspondant à la détection d'au moins un traceur de vieillissement du matériau polymère.

Suivant un mode de réalisation, chaque source infrarouge est à bande étroite de longueur d'onde d'émission contenant la longueur d'onde prescrite, dite d'intérêt ou aussi pic d'intérêt, correspondant au traceur de vieillissement du matériau polymère M.

Suivant un mode de réalisation, la source infrarouge n'émet que dans au moins une zone spectrale d'émission (ou bande) contenant la raie spectrale d'émission ou autour de la raie spectrale d'émission ayant la longueur d'onde prescrite de rayonnement infrarouge correspondant à la détection du traceur de vieillissement du matériau polymère M.

Suivant un mode de réalisation, la source 101 infrarouge est une diode électroluminescente infrarouge. Une telle diode émet dans la zone spectrale d'émission précitée, située autour de la raie précitée. Cette zone spectrale d'émission peut être par exemple représentée par une gaussienne centrée sur la raie spectrale correspondant à l'énergie maximale émise. La diode peut donc être caractérisée par la raie et la bande dans laquelle la raie se situe.

Suivant un autre mode de réalisation, la source 101 infrarouge est une source laser. Une telle source laser est sensiblement monochromatique. Dans ce cas, la source n'émet qu'à la longueur d'onde prescrite, ou dans une zone spectrale d'émission de largeur sensiblement nulle autour de la raie précitée.

Suivant un mode de réalisation, le dispositif 1 peut comporter une surface 1010 en laquelle ou sous laquelle se trouvent les sources 101 et/ou le ou les détecteur(s) infrarouge(s) 102 et qui est destinée à être tournée vers le matériau polymère M à tester. Dans un mode de réalisation, les sources 101 et/ou le ou les détecteur(s) infrarouge(s) 102 sont recouvertes par au moins un bloc extérieur 1011, qui est transparent aux premier et deuxième rayonnements infrarouge(s) 111 et 112 et disposé de sorte à ce que la face distale 1013 du bloc extérieur soit au plus près de la surface 200 du matériau polymère M sans être en contact avec celle-ci . Ce bloc extérieur 1011 permet de transmettre le rayonnement 111 des sources infrarouges 101 vers le matériau M et du matériau M vers le ou les détecteur(s) infrarouge(s) sans altérations, autre que les modifications de trajets des premier et deuxième rayonnements infrarouge(s) 111 et 112 dues à la réfraction selon les lois de l'optique géométrique comme le montre la figure 1-b pour ce mode de réalisation. Le mince volume 1014 laissé vacant entre la face distale 1013 et la surface 200 du matériau polymère M limite les perturbations que provoque la présence de l'air sur la mesure en interagissant avec le(s) rayonnement(s) infrarouge(s) 111 et/ou 112 et évite que l'oxygène contenu dans l'air puisse atténuer le rayonnement par des absorptions à des longueurs d'onde spécifiques. Ce bloc peut être par exemple en germanium.

Le ou les détecteur(s) infrarouge(s) 102 sont configurés pour recevoir un deuxième rayonnement infrarouge 112, qui est réfléchi par le matériau polymère M (par la surface 200 de celui-ci) en réponse à l'envoi du premier rayonnement infrarouge 111 provenant des sources infrarouges 101.

Le dispositif 1 comporte une unité 2 de détermination du paramètre du matériau polymère M en fonction des raies spectrales d'émission ayant les longueurs d'onde prescrites dans le deuxième rayonnement infrarouge 112.

Pour une zone spectrale d'émission (ou bande) contenant une raie spectrale d'émission ou autour de la raie spectrale d'émission, comme par exemple dans le cas d'une diode comme source 101, et en l'absence de tout autre source de rayonnement, l'énergie du deuxième rayonnement est comprise dans la bande associée à la diode qui réalise l'émission. Le détecteur infrarouge 102 ne connait pas le concept de bande mais n'intègre que l'énergie qui vient de la source, telle que la diode par exemple. Il est donc ainsi créé une bande à la réception.

Suivant un mode de réalisation, l'unité 2 détermine le paramètre du matériau polymère M en fonction de la présence et/ou de l'amplitude d'un deuxième signal obtenu à partir du détecteur infrarouge 102 et à partir du deuxième rayonnement 112 infrarouge aux longueurs d'onde prescrites correspondant aux raies spectrales.

L'unité 2 de détermination peut être configurée pour calculer le paramètre du matériau polymère M en fonction du rapport calculé de chacune des amplitudes du deuxième signal obtenues à partir du deuxième rayonnement 112 infrarouge aux longueurs d'onde prescrites correspondant aux raies spectrales respectives, divisée par l'amplitude d'un premier signal servant à commander les sources infrarouges 101 pour envoyer le premier rayonnement infrarouge 111 ayant les raies spectrales aux longueurs d'onde prescrites.

Suivant un mode de réalisation de l'invention, les deux au moins raies spectrales R1, R2, R3, R4, R5, R6 de longueurs d'onde prescrites sont choisies dans l'intervalle de longueur d'onde allant de 2 µm à 10 µm, c'est-à-dire dans l'intervalle de nombre d'onde allant de 1000 cm⁻¹ à 5000 cm⁻¹. Suivant un mode de réalisation de l'invention, la largeur à mi-hauteur des zones spectrales B1, B2, B3, B4, B5, B6 d'émission contenant respectivement les raies R1, R2, R3, R4, R5,R6 est inférieure ou égale à 1 µm. Suivant un mode de réalisation de l'invention, la largeur à mi-hauteur (FWM) des zones spectrales B1, B2, B3, B4, B5, B6 d'émission contenant respectivement les raies R1, R2, R3, R4, R5, R6 est supérieure ou égale à 0.2 µm et inférieure ou égale à 1 µm. Par exemple, cette largeur à mi-hauteur peut être égale à 0.2 µm.

Suivant un mode de réalisation de l'invention, les raies spectrales R1, R2, R3, R4, R5, R6 sont choisies en au moins deux des longueurs d'onde décrites ci-dessous, notamment à 6 µm et/ou 9.5 µm et/ou à 3.5 µm et/ou 7.2 µm et/ou à 10 µm et/ou à 2.7µm, respectivement, correspondant respectivement à des raies d'intérêt R1, R2, R3, R4, R5, R6 pour la détermination d'un paramètre du matériau polymère M.

Suivant un mode de réalisation, dans le cas où le paramètre est la présence d'un traceur de vieillissement et/ou la teneur d'au moins un traceur de vieillissement, cette présence et/ou cette teneur sont déterminés à partir des raies R1, R2, R3 R4, R5, R6 dans le deuxième rayonnement infrarouge 112, et éventuellement des bandes spectrales d'émission infrarouge B1, B2, B3, B4, B5, B6 autour respectivement des raies R1, R2, R3 R4, R5, R6.

Dans le cas où le paramètre est l'identification du matériau polymère M, l'unité 2 peut comporter, en plus, des moyens de comparaison pour comparer les au moins deux bandes spectrales (B1, B2, B3, B4, B5, B6) d'émission autour des raies (R1, R2, R3, R4, R5, R6) de longueurs d'onde prescrites dans le deuxième rayonnement infrarouge 112 à au moins une signature spectrale préenregistrée d'au moins un polymère prédéterminé, pour identifier le matériau polymère M par rapport audit polymère prédéterminé.

Dans le cas où le paramètre est l'identification du matériau polymère M, l'unité 2 comporte en plus des moyens de comparaison pour comparer
- d'une part le signal de détection du ou des détecteur(s) infrarouge(s) 112 (ou réponse(s) du ou des détecteur(s) infrarouge(s)) , obtenu à partir du deuxième rayonnement infrarouge 112, dans les bandes autour des raies aux longueurs d'onde prescrites (par exemple en amplitude du signal de détection et longueurs d'onde prescrites),
- à d'autre part une ou plusieurs valeurs caractéristiques (amplitude du signal de détection et longueurs d'onde prescrites) des raies spectrales ou des signatures spectrales, qui ont été préenregistrées dans une mémoire de l'unité 2 et qui ont été prédéterminées pour un ou des matériau(x) polymère(s) ayant une ou des identification(s) connue(s) (composition par exemple), pour déterminer si les raies spectrales du deuxième rayonnement infrarouge 112 correspondent aux valeurs caractéristiques ou aux signatures spectrales d'identifications connues.

Dans le texte les valeurs données en µm sont des longueurs d'ondes comprises chacune dans une bande d'émission des rayonnements infrarouges, les valeurs données en cm⁻¹ sont des nombres d'ondes définis comme l'inverse d'une longueur d'onde et plus d'usage chez les chimistes, les premières étant plus d'usage chez les fabricants de matériels d'optique, d'optoélectronique. De même l'usage du mot raie exprimée par un R correspondra à une raie spectrale de longueur d'onde dimensionnée en µm émise dans une bande d'émission B d'un rayonnement infrarouge, l'usage du mot pic ou pic d'intérêt exprimé par un P correspondra à un pic spectral de nombre d'onde dimensionné en cm⁻¹ caractéristique d'un composant d'intérêt d'un matériau polymère M.

Le dispositif 1 d'estimation est utilisable pour tous les polymères (notamment peintures, néoprènes, câbles électriques, etc.). Notamment la raie spectrale à 6 µm correspond à l'oxydation de tous les polymères qui se révèle via le carbonyle. En effet le carbonyle se manifeste vers environ 1700 cm⁻¹ formant un pic d'intérêt P1 correspondant dans ce qui suit à une première raie R1 de longueur d'onde prescrite à environ 6 µm comprise dans sa bande d'émission B1. Mais, par exemple, le vieillissement des néoprènes est aussi dû à d'autres causes (sa charge se dégrade) qui se manifestent entre environ 1000 cm⁻¹ et environ 1100 cm⁻¹ et on l'observe grâce à une deuxième raie R2 de longueur d'onde prescrite à environ 9.5 µm, soit 1050 cm⁻¹ formant un pic d'intérêt P2. Une troisième raie R3 se situe à une longueur d'onde prescrite à environ 3.5 µm, correspondant à un pic d'intérêt P3 situé à environ 2900 cm⁻¹. Au-delà des 3000 cm⁻¹, on observe d'autres causes de vieillissement, applicables à différents modes de vieillissement de tous, ou de certains polymères. On a par exemple une raie spectrale de longueur d'onde prescrite avec sa bande associée par mode de vieillissement.

Par exemple, la concentration en carbonyle est un traceur de vieillissement qui peut être déterminée grâce à la loi de Beer-Lambert. Ce paramètre physique, qui aura un rôle de traceur de vieillissement, est directement responsable de la dégradation oxydative.

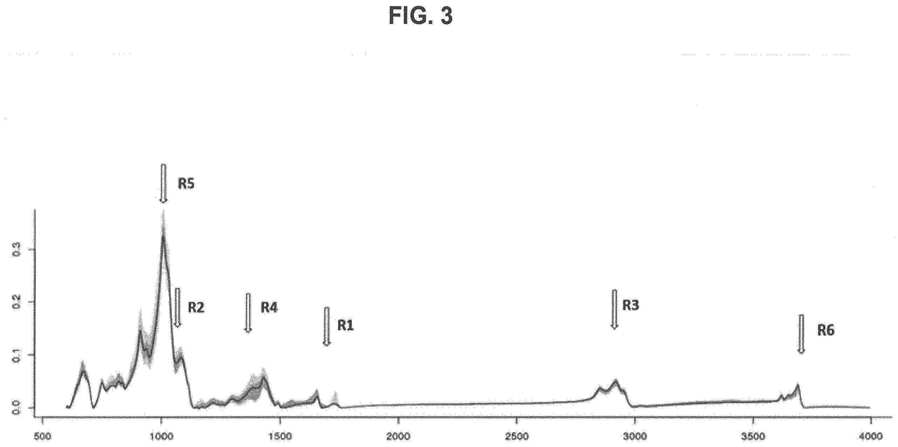

Quel que ce soit le type de composant ou revêtement époxyde, dès lors qu'il est de structure polymère, la génération des premiers vieillissements se produit à l'échelle de la structure de la matière, au niveau moléculaire. Des expériences ont montré qu'une analyse des spectres de réflectance infrarouge, selon un traitement statistique par boxplot fonctionnelle qui représente graphiquement les courbes statistiques de la réflectance infrarouge (densité de présence en ordonnées) selon la figure 3, a permis de révéler des pics d'intérêt où apparaissent les détériorations des polymères.

La méthode de Boxplot fonctionnelle est une méthode statistique dérivant de la boîte à moustache, applicable aux fonctions et non à un jeu de scalaires.

On fait correspondre à ces pics des raies aux fréquences infrarouges où la dispersion statistique des courbes obtenues par boxplot fonctionnelle est large, surtout vers le pic P2 à environ 1050 cm⁻¹ et le pic P4 à environ 1350 cm⁻¹ correspondant à la deuxième raie spectrale R2 et à une quatrième raie spectrale R4 respectivement de longueur d'onde prescrite à environ 9.5 µm et 7.2 µm respectivement. Le détecteur 102 placé dans ces régions du spectre permet de caractériser le vieillissement. Suivant un mode de réalisation, chaque pic d'intérêt ou raie d'intérêt correspond à une zone spectrale où se trouve l'information pertinente pour la détection du traceur de vieillissement et pour l'estimation du paramètre. Cette information pertinente a pu être trouvée par analyse statistique via la méthode de BoxPlot Fonctionelle.

Dans le cas des polymères, l'analyse porte sur le spectre de la réflectance après émission d'onde IR dans la bande de l'infrarouge moyen; c'est de cette réflectance que les singularités sont observées après une analyse statistique.

La figure 3 représente un exemple de boxplot fonctionnelle. Elle représente les variations de la réflectance du rayonnement infrarouge 111, 112 en ordonnées en fonction de l'inverse de la longueur d'onde en abscisses en cm⁻¹. A la figure 3, on distingue les quartiles de la fonction densité, à savoir :
1) En noir la courbe médiane,
2) En gris foncé toutes les courbes entre les quartiles fonctionnels 25% et 75%, soit 50% des données centrales,
3) En gris clair toutes les courbes entre 5% et 95%, soit les bornes des données sans observations aberrantes (en anglais : outliers).

Dans cette figure 3, les observations aberrantes ne sont pas représentées.

Ainsi la figure 3 montre, marqués de flèches, les raies R1, R2, R3, R4, R5, R6 correspondant à des pics d'intérêt. Notamment, la figure 3 montre la cinquième raie spectrale R5 à environ un cinquième pic P5 d'intérêt à 1000 cm⁻¹, correspondant à une longueur d'onde prescrite d'environ 10 µm, et la deuxième raie spectrale R2 à environ le deuxième pic d'intérêt P2 à environ 1050 cm⁻¹ correspondant à une longueur d'onde prescrite d'environ 9.5 µm correspondent aux pics de la silice et à celui de la silice hydrolysée respectivement, et la sixième raie spectrale R6 à environ un sixième pic P6 d'intérêt à environ 3700 cm⁻¹, correspondant à une longueur d'onde prescrite d'environ 2.7 µm.

La méthode statistique mentionnée ci-dessus a permis de déterminer une fonction de distribution pour l'ensemble des réflectances en plusieurs des ou toutes les longueurs d'onde précitées ou nombre d'onde précités. Ainsi, suivant l'invention, on utilise au moins deux raies spectrales de longueur d'onde différentes ou de nombre d'onde différents, provenant de deux sources infrarouges distinctes. Cela permet de surmonter les dispersions dans les mesures, pouvant être dues à l'état de surface du matériau polymère. Cela permet ainsi de détecter de façon plus efficace le degré de vieillissement et/ou l'identification du matériau polymère.

Suivant un mode de réalisation, une source infrarouge est caractérisée par une bande spectrale B où se produit l'émission, cette bande se trouve autour une raie spectrale R où, en général, l'énergie de l'émission est maximale.

La bande spectrale émise les sources infrarouges sont choisies autour d'au moins deux des raies spectrales R1, R2, R3, R4, R5, R6.

Suivant un mode de réalisation, on surveille lesdites raies spectrales d'intérêt après avoir traité les signaux parasites causés par la température des matériaux rayonnant dans ces bandes spectrales et causant un bruit très important à impérativement effacer.

Ainsi, il suffit de procéder à des tirs infrarouges dans les bandes spectrales de longueur d'onde étroites autour d'au moins deux des raies précitées
et de mesurer la densité relative de la réflectance pour caractériser le vieillissement.

Le domaine préférentiel choisi du faisceau projeté et donc la mesure de sa réflectance se situe préférentiellement dans l'intervalle de nombre d'onde
[1000 cm⁻¹; 4000 cm⁻¹] comme le montre l'exemple de la figure 3, ce qui correspondant à l'intervalle de longueur d'onde associée [2,5 µm; 10 µm]. Ce choix résulte de ce qu'à partir de 10 µm les moyens de mesure deviennent coûteux, et qu'en dessous de 2.5 µm il n'y a pas d'observation pertinente.

Suivant un mode de réalisation, il y a autant de sources infrarouges 101 émettant autour des longueurs d'onde prescrites des raies spectrales qu'il y a de pics ou raies d'intérêt.

Suivant un mode de réalisation, la source infrarouge 101 est directive pour émettre le premier rayonnement infrarouge selon une première direction déterminée vers le matériau polymère M. Par exemple, dans le cas d'une diode pour la source 101, la diode peut comporter une lentille. Pour une source donnée 101, le détecteur 102 sera idéalement placé de sorte à ce que la réflexion du deuxième rayonnement infrarouge 112 mesuré ait un angle de réflexion égal à l'angle d'incidence du premier rayonnement infrarouge 111 envoyé et où toute l'énergie émise (ou presque) se retrouve dans le deuxième rayonnement infrarouge 112 réfléchi ; on recherche donc une réflexion, spéculaire, de laquelle sera issue la réflectance.

Bien entendu, la réflexion du matériau polymère M pourrait également être diffuse, dans le demi-espace délimité par la surface 200 du matériau polymère, dans lequel se trouve le dispositif 1.

Suivant un mode de réalisation, le au moins un détecteur infrarouge 102 est apte à recevoir un spectre de réflectance infrarouge du matériau polymère M en réponse au(x) premier rayonnement(s) infrarouge(s) 111 envoyé(s) par les sources infrarouges 101. Suivant un mode de réalisation, le au moins un détecteur infrarouge 102 est apte à recevoir dans le deuxième rayonnement infrarouge 112 les raies spectrales R1, R2, R3, R4, R5, R6 aux longueurs d'onde prescrites. Suivant un mode de réalisation, le au moins un détecteur infrarouge 102 est apte à recevoir dans le deuxième rayonnement infrarouge 112 les bandes B1, B2, B3, B4, B5, B6. La bande de longueur d'onde de réception du détecteur infrarouge 102 comporte par exemple au moins les longueurs d'onde prescrites et/ou les raies spectrales R1, R2, R3, R4, R5, R6 de longueurs d'onde prescrites et/ou les bandes de longueurs d'onde émises par les sources infrarouges 101. Le au moins un détecteur infrarouge 102 peut être par exemple à large bande en longueur d'onde de réception. Suivant un mode de réalisation, le au moins un détecteur infrarouge 102 est placé dans la réflexion, spéculaire et/ou diffuse, du matériau M. Le au moins un détecteur infrarouge 102 est photo-détecteur qui peut être par exemple du type photodiode ou photoconducteur. Par exemple, le détecteur infrarouge 102 est apte à générer un photo-courant électrique en fonction du deuxième rayonnement infrarouge 112. Une électronique d'acquisition permet d'acquérir le signal analogique issu du détecteur infrarouge 102.

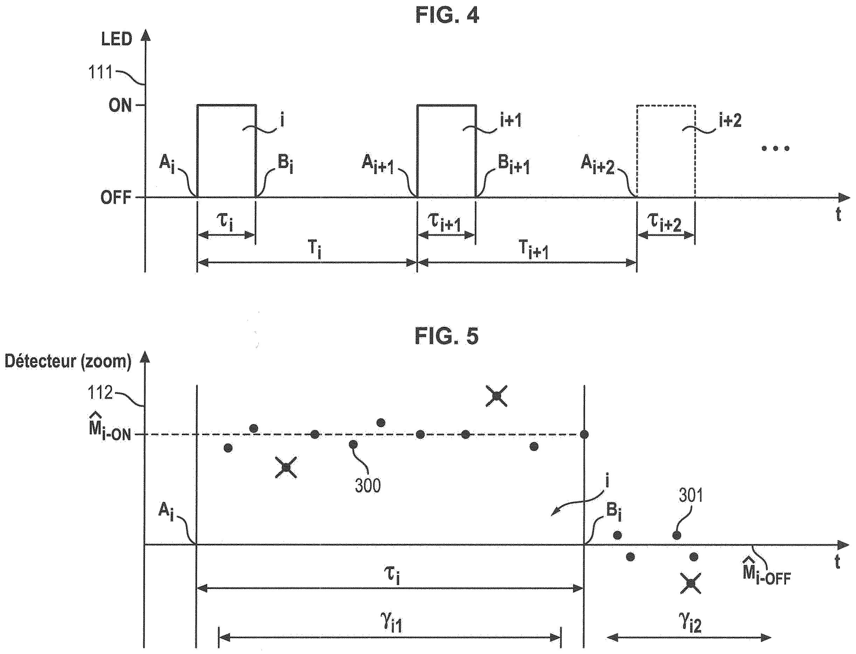

Suivant un mode de réalisation, les sources infrarouges 101 sont aptes à envoyer vers le matériau polymère M le premier rayonnement infrarouge 111 sous la forme d'une ou plusieurs impulsion(s) temporelle(s) i, i+1, i+2, pouvant être par exemple rectangulaire(s), ainsi que représenté à la figure 4. Suivant un mode de réalisation, le dispositif 1 comporte un module 12 de commande des sources 101 par un signal de commande impulsionnel, pouvant être par exemple rectangulaire et/ou périodique de fréquence de répétition prescrite f_{R}, pour que les sources émettent le premier rayonnement infrarouge 111 sous la forme d'une ou plusieurs impulsions temporelles, par exemple rectangulaires et/ou périodiques.

Les impulsions temporelles successives i, i+1, i+2 émises par la source infrarouge 101 peuvent avoir par exemple chacune une largeur temporelle (premier état ON de la source infrarouge 101) respective τᵢ, τᵢ₊₁ et τᵢ₊₂ prescrite, et avoir des débuts respectifs Aᵢ, Aᵢ₊₁ et Aᵢ₊₂ d'impulsions successives i, i+1, i+2 qui sont espacés temporellement de respectivement les durées Tᵢ et Tᵢ₊₁. Entre les impulsions i, i+1, i+2 se trouvant à l'état ON, la source 101 est au deuxième état OFF (par exemple bas ou éteint) différent du premier état ON (par exemple haut ou allumé), cet état OFF entre les impulsions successives i et i+1 ayant une durée Tᵢ-τᵢ.

Suivant un mode de réalisation, les impulsions i, i+1, i+2 peuvent se répéter avec une période prescrite T, chaque durée Tᵢ étant alors égale à la période T = Tᵢ = Tᵢ₊₁, correspondant à une fréquence de répétition f_{R}=1/T. Suivant un mode de réalisation, les largueurs temporelles respectives τᵢ, τᵢ₊₁ et τᵢ₊₂ des impulsions peuvent être égales à une même largeur temporelle τ = τᵢ = τᵢ₊₁ = τᵢ₊₂.

Par exemple, τᵢ₊₁ ≤ Tᵢ et τᵢ₊₂ ≤ Tᵢ

Bien entendu, les largeurs temporelles respectives τᵢ, τᵢ₊₁ et τᵢ₊₂ pourraient être différentes entre elles. Bien entendu, les durées Tᵢ et Tᵢ₊₁ pourraient être différentes entre elles.

Cette caractéristique permet de détecter les raies de longueurs d'onde prescrites dans le deuxième rayonnement infrarouge 112 reçu du matériau polymère M, et ce même en présence du rayonnement thermique de ce matériau polymère M. Ce rayonnement thermique est dû à la température de l'échantillon mesuré (matériau polymère M) et est continuellement émis avec une énergie pouvant être jusqu'à environ mille fois supérieure à celle du deuxième rayonnement infrarouge 112 réfléchi par ce matériau polymère M dans une bande spectrale étroite autour des raies spectrales de longueurs d'onde prescrites, ce qui perturbe donc la détection de ce deuxième rayonnement 112 et la réflectance mesurée.

Suivant un mode de réalisation, le dispositif 1 comporte au moins un organe 103 de commande manuelle pour déclencher l'envoi du premier rayonnement infrarouge 111 par les sources infrarouges 101, par exemple selon une impulsion temporelle ou une salve des impulsions temporelles i, i+1, i+2. Suivant un mode de réalisation, l'organe de commande manuelle 103 peut être précontraint par un organe de précontrainte (par exemple un ressort ou autre) à revenir dans une première position de non actionnement ne déclenchant pas l'envoi du premier rayonnement infrarouge 111 par la source 101, depuis sa deuxième position d'actionnement manuel déclenchant l'envoi du premier rayonnement infrarouge 111 par la source 101, l'organe de commande étant mobile entre l'une et l'autre de ces première et deuxième positions. L'utilisateur doit ainsi maintenir l'organe 103 de commande appuyé dans la deuxième position d'actionnement manuel pour déclencher l'envoi du premier rayonnement infrarouge 111 par la source 101. L'organe de commande manuelle 103 peut être du type bouton ou gâchette.

Suivant un mode de réalisation, le ou les détecteur(s) infrarouge(s) 102 sont commandés d'une manière synchrone avec les sources 101, ainsi que représenté aux figure 4, 5 et 6. Le dispositif 1 ou l'unité 2 peut comporter des moyens de commande pour mettre en marche le au moins un détecteur infrarouge 102 d'une manière synchrone avec la ou les impulsion(s) temporelle(s) (i, i+1, i+2).

Suivant un mode de réalisation, le module 12 de commande est relié à la fois aux sources 101 et au(x) détecteur(s) infrarouge(s) 102, pour que le ou les détecteur(s) infrarouge(s) 102 soit mis en marche pendant les impulsions temporelles i, i+1, i+2 (se trouvant dans le premier état ON de largeur temporelle τᵢ), ainsi que représenté par exemple à la figure 5 par les points représentant les valeurs mesurées, et soit éteint (deuxième état OFF différent du premier état ON) entre les impulsions temporelles i, i+1, i+2.

Suivant un mode de réalisation, le module 12 de commande est relié à la fois aux sources 101 et au(x) détecteur(s) infrarouge(s) 102, pour que le ou les détecteur(s) infrarouge(s) 102 soit mis en marche pendant les impulsions temporelles i, i+1, i+2 (se trouvant dans le premier état ON de largeur temporelle τᵢ), ainsi que représenté par exemple à la figure 5 par les points représentant les valeurs mesurées, et soit également mis en marche (deuxième état OFF différent du premier état ON) entre les impulsions temporelles i, i+1, i+2, ainsi que cela est représenté à titre d'exemple à la figure 5. Suivant un mode de réalisation, le détecteur infrarouge 102 réalise plusieurs mesures du deuxième rayonnement infrarouge 112 reçu (représentées par les points à la figure 5) pendant chaque impulsion temporelle i, i+1, i+2.

Ainsi que cela est représenté à la figure 5, suivant un mode de réalisation, le dispositif 1 comporte un moyen 21 de commande pour effectuer plusieurs premières mesures 300 du deuxième rayonnement infrarouge 112 pendant une première largeur temporelle prescrite γᵢ₁ comprise dans ou égale à la largeur temporelle respective τᵢ du premier état ON de l'impulsion i (on a donc γᵢ₁ ≤ τᵢ ), pour calculer une estimation d'une première valeur *M̂_{i-ON}* représentative des premières mesures 300 effectuées pendant la largeur temporelle prescrite γᵢ₁, le paramètre étant calculé à partir de la première valeur *M̂_{i_ON}* .

Suivant un mode de réalisation, le dispositif 1 comporte un moyen 21 de commande pour effectuer plusieurs deuxièmes mesures 301 du deuxième rayonnement infrarouge 112 pendant une deuxième largeur temporelle prescrite γᵢ₂ comprise dans ou égale à la largeur temporelle respective Tᵢ-τᵢ du deuxième état OFF entre l'impulsion i et l'impulsion suivante i+1 ou entre la largeur temporelle respective Tᵢ₋₁-τᵢ₋₁ du deuxième état OFF entre l'impulsion i et l'impulsion précédente i-1 (on a donc γᵢ₂ ≤ Tᵢ-τᵢ ou γᵢ₂ ≤ Tᵢ₋₁-τᵢ₋₁), pour calculer une estimation d'une deuxième valeur *M̂_{i-OFF}* représentative des deuxièmes mesures 301 pendant la deuxième largeur temporelle prescrite γᵢ₂, le paramètre étant calculé à partir de la deuxième valeur *M̂_{i-OFF}.*

Suivant un mode de réalisation, le paramètre est calculé à partir de la première valeur *M̂_{i-ON}* et de la deuxième valeur *M̂_{i-OFF}* , par exemple à partir de la différence calculée entre la première valeur *M̂_{i-ON}* et de la deuxième valeur *M̂_{i-OFF}* . Cela permet de compenser les décalages de zéro des mesures 300 de l'état ON par rapport à l'état OFF.

Suivant un mode de réalisation, la première valeur *M̂_{i-ON}* est calculée à partir d'une sélection des premières mesures 300 ayant moins d'un écart prescrit par rapport à cette première valeur *M̂_{i-ON}* . Suivant un mode de réalisation, la deuxième valeur *M̂_{i-OFF}* est calculée à partir d'une sélection des deuxièmes mesures 301 ayant moins d'un écart prescrit par rapport à cette deuxième valeur *M̂_{i-OFF}.* On élimine ainsi les points aberrants (ou « outliers », représentés par des croix à la figure 5) parmi les mesures 300 et 301. Suivant un mode de réalisation, les mesures multiples de la figure 5, acquises pendant une impulsion i, servent à réduire le bruit électronique, car un traitement statistique est appliqué à ces mesures. Suivant un mode de réalisation, la première valeur *M̂_{i-ON}* peut être par exemple une médiane des premières mesures 300, une estimation robuste de la moyenne des premières mesures 300 ou une autre estimation centrale (non gaussienne). Suivant un mode de réalisation, la deuxième valeur *M̂_{i-OFF}* peut être par exemple une médiane des deuxièmes mesures 301, une estimation robuste de la moyenne des deuxièmes mesures 301 ou une autre estimation centrale (non gaussienne). Suivant un mode de réalisation, on applique ensuite à la première valeur *M̂_{i_ON},* ou à la différence calculée entre la première valeur *M̂_{i-ON}* et de la deuxième valeur *M̂_{i-OFF}* un traitement fréquentiel (par le filtre 11) pour s'affranchir du bruit thermique de l'échantillon polymère M.

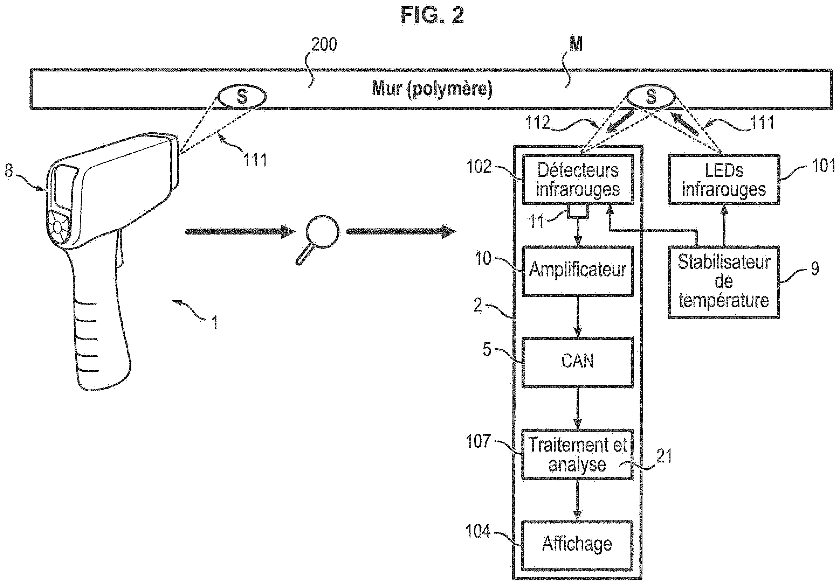

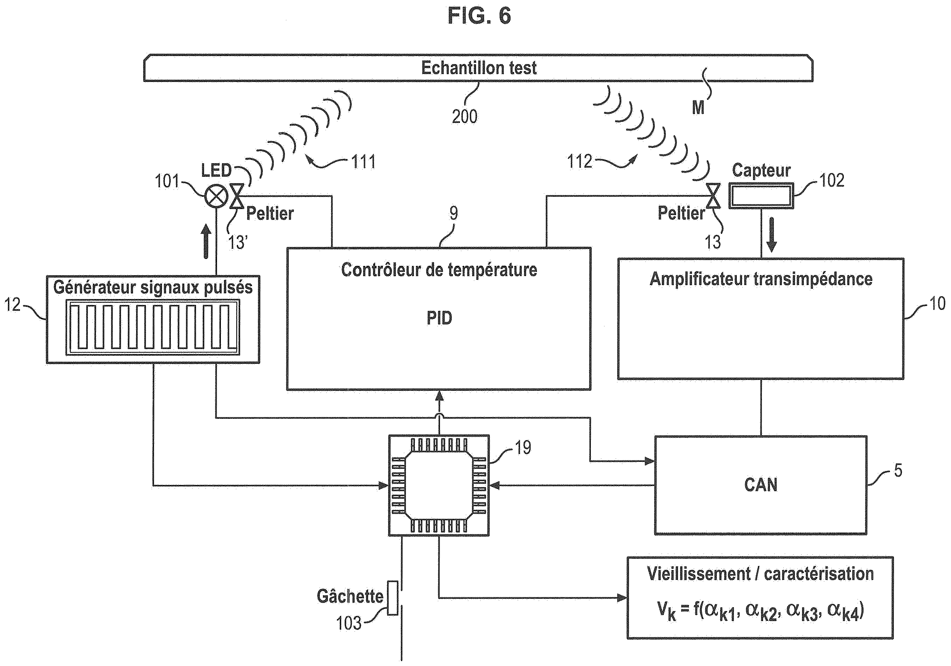

On décrit ci-dessous des modes de réalisations de l'unité 2 de détermination, en référence aux figures 2 et 6.

Suivant un mode de réalisation, le dispositif 1 comporte des moyens d'extraction pour extraire du deuxième rayonnement infrarouge 112 reçu du ou des détecteur(s) infrarouge(s) 102 la réponse du matériau polymère M aux raies spectrales de longueurs d'onde prescrites envoyées par les sources infrarouges 101 et/ou aux bandes autour des raies spectrales. Ces moyens d'extraction comprennent par exemple un ou plusieurs des éléments décrits ci-dessous.

Suivant un mode de réalisation, le dispositif 1 comporte au moins un circuit et/ou un filtre 11 de suppression ou d'atténuation d'une composante continue dans un signal, ayant été fourni par le détecteur infrarouge 102 à partir du deuxième rayonnement infrarouge 112. Tous les corps d'une température supérieure au zéro absolu émettent en fonction de la température, un rayonnement qui suit la loi de Planck définissant l'émittance monochromatique du corps noir en fonction de la longueur d'onde et de sa température absolue. A la température ambiante la plage d'émission est en dessous de l'étendue des longues ondes rouges et elle est invisible à l'oeil humain. L'émissivité d'un objet indique la quantité d'énergie infrarouge rayonnée. Les objets mesurés par le dispositif 1 ont tendance à émettre ce rayonnement thermique dans la plage de longueur d'onde qui va de 1 à 20 µm. De ce fait, le deuxième rayonnement infrarouge 112 reçu par le détecteur infrarouge 102 sera composé d'une composante continue et d'une composante alternative (le deuxième rayonnement infrarouge 112 de réponse au premier rayonnement infrarouge 111 ayant les raies spectrales prescrites.

Suivant un mode de réalisation, le circuit et/ou le filtre 11 est au moins un circuit et/ou au moins un filtre passe-haut du dispositif 1 et/ou au moins un filtre passe-bande du dispositif 1. Cela permet de ne laisser passer que le spectre du signal utile et d'éliminer le rayonnement thermique correspondant à la composante continue du spectre. La décomposition en séries de Fourier du deuxième rayonnement infrarouge 112 présent donne un spectre constitué d'une composante continue représentant la valeur moyenne du signal et d'une suite d'harmoniques dont l'amplitude varie avec la fréquence en sin(x)/x. Par exemple, le filtre passe-haut peut être du premier ordre. Un filtre passe-haut du premier ordre ayant une fréquence de coupure de 1/(2T), où T est la période de répétition des impulsions temporelles, permet d'atténuer considérablement la composante continue. En revanche, la composante continue du signal restitué dépend de l'atténuation du filtre. Ce problème est sans importance dans notre cas car l'amplitude du signal rectangulaire peut être déterminée par la différence entre les impulsions hautes et les impulsions basses. Un amplificateur, non représenté, peut être prévu en aval du filtre 11. Il peut être prévu un amplificateur 10 et un filtre 11 passe-haut, pour récupérer dans le signal filtré le signal rectangulaire généré par le rayonnement 111 des sources.

Un banc de test a été mis en place afin de valider l'architecture d'acquisition pulsée proposée. Dans un prototype monocanal construit à titre d'exemple non limitatif, une source 102 formée d'une diode électroluminescente a été commandée par un signal de commande impulsionnel rectangulaire de fréquence de répétition f_{R} de 4 kHz et de rapport cyclique 20%. Le banc est constitué du détecteur infrarouge, d'une diode électroluminescente et d'un amplificateur transimpédance. L'objectif a été de générer, dans le photo-détecteur (détecteur infrarouge), un signal rectangulaire suffisamment plus petit que le signal généré par la température. Nous avons utilisé une LED émettant un signal rectangulaire. Le photo-courant issu du détecteur est ensuite envoyé dans l'amplificateur transimpédance. La mesure de la composante continue donne un photo-courant de l'ordre de 40A ce qui correspondrait au signal crée par le rayonnement thermique. Le signal a été ensuite filtré (passe-haut) et amplifié afin de reconstruire la composante alternative générée par la LED. Une atténuation de 12dB, une fréquence de coupure de 0,3 Hz, et un gain de 1pA/V permet de restituer un signal (impulsions rectangulaires de fréquence de répétition f_{R} de 4 kHz et de rapport cyclique 20%) plus que 1000 fois plus petit que le fond continu. Cette mesure valide l'architecture pulsée pour le prototype monocanal.

Ainsi, suivant un mode de réalisation, le dispositif suivant l'invention prend en compte le traitement du bruit causé par le rayonnement thermique. Suivant un mode de réalisation, la solution consiste à émettre des tirs pulsés selon un signal rectangulaire d'amplitude et de longueur d'onde prescrite et de fréquence de répétition prescrite f_{R}, signaux dont la réflexion mesurée par le détecteur 102 sera traitée temporellement par un développement de Fourier, ce qui aura pour effet d'éliminer le bruit du rayonnement thermique.

Suivant un mode de réalisation, le dispositif 1 comporte un module 13 de refroidissement, par exemple du type Peltier, pour refroidir le ou les détecteur(s) infrarouge(s) 102 et/ou un module 13' de refroidissement, par exemple du type Peltier pour refroidir la ou les source(s) 101. Cela permet de refroidir la source 101 et le détecteur 102 à une température stable. Notamment un module de refroidissement Peltier est de petite taille, ce qui permet de gagner en compacité du dispositif 1.

Un module 13, 13' de refroidissement du type Peltier est composé d'un empilement de thermo-éléments. Un thermo-élément est constitué par deux composants semi-conducteurs. Quand un courant continu est imposé aux bornes du module 13, 13' de refroidissement du type Peltier, une absorption de chaleur se produit. La chaleur absorbée est ensuite transmise à la partie chaude du composant, qui a comme effet une transmission de la chaleur d'un coté à l'autre du module 13, 13'.

Suivant un mode de réalisation, le dispositif 1 comporte un thermostat et une unité électronique 9 de stabilisation automatique de température ou contrôleur de température (basé sur un régulateur de type Proportionnel, Intégrateur et Différentiel), qui est reliée au(x) module(s) 13, 13' de refroidissement, par exemple du type Peltier, pour maintenir le au moins un détecteur infrarouge (102) et/ou la au moins deux sources infrarouges (101) à une température prescrite par le thermostat. Par exemple, le contrôleur 9 de température régule les températures de la source LED 101 et du détecteur 102 typiquement autour d'une consigne donnée à -30 °C.

L'unité 9 peut être analogique ou numérique et être embarquée dans un système sur puce (System On Chip SOC) par exemple un micro-côntroleur, un circuit logique programmable (Field Programmable Gate Array FPGA), ou un circuit intégré dédié (Application Spécifie Integrated Circuit - ASIC).

Suivant un mode de réalisation, le dispositif 1 comporte un amplificateur 10 en aval du circuit et/ou du filtre 11 pour amplifier le signal filtré. Cet amplificateur 10 peut être un amplificateur transimpédance.

Suivant un mode de réalisation, le dispositif 1 comporte un convertisseur analogique-numérique 5 en aval de l'amplificateur 10. Un système électronique pour la commande et le contrôle du convertisseur analogique-numérique 5 est prévu. Le convertisseur analogique-numérique 5 permet de générer le signal numérique correspondant à la réflectance du matériau polymère M à chaque longueur d'onde prescrite.

Suivant un mode de réalisation, le dispositif 1 comporte des moyens 107 de traitement et de stockage de données, pour déterminer le paramètre à partir au moins de l'importance des raies de longueurs d'onde prescrites dans le signal de détection du ou des détecteur(s) infrarouge(s), obtenu à partir du deuxième rayonnement infrarouge 112, ou à partir de l'importance de la réponse du ou des détecteur(s) infrarouge(s) dans des bandes autour des raies de longueurs d'onde prescrites dans le deuxième rayonnement infrarouge 112. Dans l'exemple décrit ci-dessus, les moyens 107 de traitement et de stockage de données, déterminent le paramètre à partir du ou des signaux numérique(s) fourni(s) par le convertisseur analogique-numérique 5, qui correspondant respectivement à cette amplitude selon les raies respectives et longueurs d'onde prescrites respectives. Suivant un mode de réalisation, les moyens 107 de traitement et de stockage de données peuvent comporter un module de traitement par transformée de Fourier, au lieu de ou en plus du circuit et/ou filtre 11. En outre, ces moyens 107 de traitement et de stockage de données peuvent comporter le moyen 21 de commande pour effectuer les mesures de la manière précitée et pour sélectionner les mesures de la manière précitée.

Suivant un mode de réalisation, le dispositif 1 comporte des moyens 109 de téléchargement de programmes informatiques, pouvant comprendre des programmes logiciel implémentant un algorithme embarqué pour la détermination précitée. Les moyens 107, 109 peuvent comprendre un système électronique de chargement à cet effet tel que un microcontrôleur, un FPGA, un ASIC, etc,.

Suivant un mode de réalisation, le dispositif 1 comporte une garde 110 pour positionner les sources infrarouges 101 et le détecteur infrarouge 102 en face et/ou à proximité d'une zone S du matériau polymère M devant recevoir le premier rayonnement infrarouge 111 et réfléchir le deuxième rayonnement infrarouge 112. Suivant un mode de réalisation, la garde 110 est agencée pour que le bloc extérieur 1011 se trouve à distance de la surface 200 du matériau polymère M, lorsque la garde 110 est positionnée contre la surface 200 du matériau polymère M. Par exemple, le bloc extérieur 1011 a une surface distale extérieure 1013, qui est à la fois orientée vers la surface 200 du matériau polymère M et qui est en retrait par rapport à la surface distale extérieure 113 de la garde 110, également tournée vers la surface 200 du matériau polymère M. Par exemple, l'angle d'incidence du premier rayonnement infrarouge 111 sur la surface 200 du matériau polymère M à tester peut être supérieur ou égal à 10 degrés ou 20 degrés et inférieur ou égal à 60 ou 70 degrés et peut être assuré par le positionnement de la garde 110 et/ou du bloc extérieur 1011 contre cette surface 200. Par exemple, l'angle de réflexion du deuxième rayonnement infrarouge 112 sur la surface 200 du matériau polymère M à tester peut être supérieur ou égal à 10 degrés ou 20 degrés et inférieur ou égal à 60 ou 70 degrés et peut être assuré par le positionnement de la garde 110 et/ou du bloc extérieur 1011 contre cette surface 200. Par exemple, la distance entre les sources infrarouges 101 et la surface 200 du matériau polymère M à tester peut être supérieure ou égal à 1 mm et inférieure ou égale à 10 cm et peut être assurée par le positionnement de la garde 110 contre cette surface 200. Par exemple, la distance entre le ou les détecteur(s) infrarouge(s) 102 et la surface 200 du matériau polymère M à tester peut être supérieure ou égal à 1 mm et inférieure ou égale à 10 cm et peut être assurée par le positionnement de la garde 110 contre cette surface 200.

Suivant un mode de réalisation, le dispositif 1 a la forme d'un pistolet 100 comportant un manche 14 de préhension raccordé à un module 15 de visée comportant à une extrémité avant 16 éloignée du manche 15 la source 101 et le détecteur 102 (et/ou la surface 1010 d'application et la garde 110 devant et à côté de la source 101 et du détecteur 102). L'organe 103 de commande se trouve par exemple près d'une zone 17 du pistolet 100 raccordant le manche 14 au module 15 de visée. Ce manche permet ainsi également d'introduire le dispositif 1 dans des conduites ou contre une surface intérieure d'un tube. Bien entendu, le dispositif 1 peut avoir toute autre forme, comme par exemple la forme d'un stylo ou autres.

Suivant un mode de réalisation, le dispositif 1 comporte un moyen 104 d'indication d'une information, pouvant être visuelle et/ou sonore, et pouvant être une information indiquant le paramètre comme par exemple la présence du ou des traceur(s) de vieillissement ou une information indiquant l'absence du ou des traceur(s) de vieillissement, et/ou information indiquant la teneur du ou des traceur(s) de vieillissement et/ou une information indiquant l'identification du matériau polymère M. Le moyen 104 d'indication peut être ou comprendre par exemple un écran 104 affichage. D'autres caractéristiques de fonctionnement du dispositif 1 peuvent être indiquées par le moyen 104 d'indication.

Suivant un mode de réalisation, le dispositif 1 peut comporter une interface 105 de commande pouvant être autre que l'organe 103 de commande et pouvant être par exemple un clavier de commande 105, par exemple sur une surface arrière 18 éloignée de la source 101 et du détecteur 102, par exemple de la zone 17.

Suivant un mode de réalisation, le dispositif 1 comporte des moyens autonomes d'alimentation électrique 106, pour alimenter en énergie les éléments précités, dont au moins la source 101, le détecteur 102 et l'unité 2. Ces moyens autonomes d'alimentation électrique 106 sont par exemple à pile ou accumulateur rechargeable ou non, amovibles ou non. Suivant un mode de réalisation, le dispositif 1 est portatif.

Suivant un mode de réalisation, le dispositif 1 comporte des moyens 108 de communication pour transmettre vers l'extérieur une information indiquant le paramètre, pouvant être une information indiquant la présence du ou des traceur(s) de vieillissement ou une information indiquant l'absence du ou des traceur(s) de vieillissement, et/ou une information indiquant la teneur du ou des traceur(s) de vieillissement et/ou une information indiquant l'identification du matériau polymère M. Les moyens 108 de communication peuvent être à communication montante et/ou descendante vers une unité distante ou une plateforme distante, comme par exemple un terminal mobile (téléphone portable ou autre), un serveur ou autre.

Suivant un mode de réalisation, l'unité 2 du dispositif 1 comporte un ou plusieurs micro-contrôleurs, FPGA, ASIC 19 pour la commande des différents éléments précités.

Par exemple, le micro-contrôleur 19 procède au cadencement suivant :
A - des ordres de mesures par appui de la gâchette 103,
B - commande de mise à la consigne de température de la source 101 et du détecteur 102,
C - commande d'envoi des impulsions ON/OFF pour la source 101,
D - commande de réception et mémorisation des mesures issues du convertisseur 5,
E - commande de traitement fréquentiel par Fourier pour supprimer le bruit dû à la température ambiante → source 101 suivante retour en C (pour mise en oeuvre des étapes C, D, E etc..)
F- Une fois les signaux de toutes les sources 101 reçus : envoi des mesures ( exemple 4 mesures pour 4 sources) au module 107 de traitement pour convertir les mesures en données pertinentes, caractérisant le vieillissement ou le matériau polymère.

Par exemple, pour effectuer une séquence de mesures, on place le dispositif 1 ou pistolet 100 sur une paroi d'un matériau polymère M en appliquant la garde 110 pour positionner et caler le pistolet 100 contre la surface 200 du matériau M à tester. Puis, on appuie sur l'organe 103 de commande ou sur la gâchette 103 selon un protocole fixé. Ainsi il est possible de pratiquer plusieurs tirs et de procéder au traitement et au stockage des données par les moyens 107, lesdites mesures ayant été préalablement affichées sur l'écran de contrôle 104 avec un indicateur visuel ou sonore acquittant ou pas la mesure.

Un opérateur muni du dispositif 1 peut effectuer, facilement et en peu de temps, des mesures du paramètre du matériau à des emplacements différents. Par exemple, il peut mener une campagne de contrôle à l'intérieur d'un bâtiment réacteur d'une centrale nucléaire. Des matériaux polymères M variés pourraient être contrôlés avec le même appareil 1. Le résultat des mesures et/ou le diagnostic du vieillissement ou de l'identification peut être affiché in-situ et en temps réel sur le dispositif 1. Le dispositif de mesure se dispense d'une mesure spectrale de la caractéristique de réflectance ou d'absorbance du matériau polymère et se dispense de l'utilisation d'un spectromètre, notamment d'un spectromètre du type FTIR ou à filtres. Le dispositif de mesure se dispense de filtres optiques et de système mécanique pour basculer d'une longueur d'onde à une autre. Ceci permet de réaliser un dispositif portatif, léger et facile à introduire pour effectuer des mesures par exemple à l'intérieur de tuyauteries. Le dispositif de mesure se dispense de déplacement mécanique de pièces et ne nécessite pas de chambres d'isolation.

## Revendications

1. Dispositif (1) portatif d'estimation d'au moins un paramètre caractéristique d'un matériau polymère, le dispositif comportant :
au moins une source infrarouge (101), la au moins une source infrarouge (101) étant au moins une diode électroluminescente infrarouge ou au moins une source laser,
au moins un détecteur infrarouge (102),
**caractérisé en ce que**
il est prévu comme source infrarouge au moins deux sources infrarouges (101), qui sont aptes à émettre vers le matériau polymère respectivement au moins deux raies spectrales (R1, R2, R3, R4, R5, R6) différentes, représentant chacune une énergie d'émission maximale, choisies en respectivement deux différentes des longueurs d'onde 10 µm, 9.5 µm, 7.2 µm, 6 µm, 3.5 µm, 2.7 µm ou en respectivement deux différentes des nombres d'onde 1000 cm⁻¹, 1050 cm⁻¹, 1350 cm⁻¹, 1700 cm⁻¹, 2900 cm⁻¹, 3700 cm⁻¹,
le au moins un détecteur infrarouge (102) est apte à recevoir les au moins deux raies spectrales (R1, R2, R3, R4, R5, R6), qui sont réfléchies par le matériau polymère (M) en réponse aux au moins deux raies spectrales (R1, R2, R3, R4, R5, R6), ayant été émise par les au moins deux sources infrarouges (101),
le dispositif comportant une unité (2) de détermination du paramètre caractéristique du matériau polymère (M) en fonction de l'énergie présente en les au moins deux raies spectrales (R1, R2, R3, R4, R5, R6), ayant été réfléchies par le matériau polymère (M) et ayant été reçues par le détecteur infrarouge (102) en réponse aux au moins deux raies spectrales (R1, R2, R3, R4, R5, R6) ayant été émises par les au moins deux sources infrarouges (101).

2. Dispositif suivant la revendication 1, **caractérisé en ce que** chacune des au moins deux raies spectrale (R1, R2, R3, R4, R5, R6) est à bande étroite d'émission.

3. Dispositif suivant la revendication 1, **caractérisé en ce que** le paramètre caractéristique du matériau polymère (M) est la présence et/ou teneur du au moins un traceur de vieillissement dans le matériau polymère.

4. Dispositif suivant l'une quelconque des revendications précédentes, **caractérisé en ce que** chaque source infrarouge (101) est apte à émettre vers le matériau polymère (M) la raie spectrale (R1, R2, R3, R4, R5, R6) sous la forme d'une ou plusieurs impulsions temporelles (i, i+1, i+2).

5. Dispositif suivant la revendication 4, **caractérisé en ce que** la ou les impulsion(s) temporelle(s) (i, i+1, i+2) sont rectangulaires.

6. Dispositif suivant la revendication 4 ou 5, **caractérisé en ce qu'**il est prévu des moyens de commande pour mettre en marche le au moins un détecteur infrarouge (102) d'une manière synchrone avec la ou les impulsion(s) temporelle(s) (i, i+1, i+2).

7. Dispositif suivant l'une quelconque des revendications 4 à 6, **caractérisé en ce que** le dispositif (1) comporte un moyen (21) de commande pour effectuer plusieurs premières mesures (300) des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101), pendant une première largeur temporelle prescrite (γᵢ₁) comprise dans ou égale à une largeur temporelle respective (τᵢ) d'au moins une des impulsions (i), pour calculer une estimation d'une première valeur (*M̂_{i-ON}*) représentative des premières mesures (300), le paramètre étant calculé à partir au moins de la première valeur (*M̂_{i-ON}* ).

8. Dispositif suivant la revendication 7, **caractérisé en ce que** le dispositif (1) comporte un moyen (21) de commande pour effectuer plusieurs deuxièmes mesures (301) des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101), pendant une deuxième largeur temporelle prescrite (γᵢ₂) comprise dans ou égale à une largeur temporelle respective (Tᵢ-τᵢ) entre deux impulsions successives (i, i+1), pour calculer une estimation d'une deuxième valeur (*M̂_{i-OFF}*) représentative des deuxièmes mesures (301), le paramètre étant calculé au moins à partir de la différence entre la première valeur (*M̂*_{*i*-*ON*} ) et la deuxième valeur (*M̂_{i-OFF}*).

9. Dispositif suivant l'une quelconque des revendications précédentes, **caractérisé en ce que** le dispositif (1) comporte en outre au moins un organe (103) de commande manuelle pour déclencher l'émission des au moins deux raies spectrales (R1, R2, R3, R4, R5, R6) par les au moins deux sources infrarouges (101).

10. Dispositif suivant l'une quelconque des revendications précédentes, **caractérisé en ce que** le au moins un détecteur infrarouge (102) est du type photodiode ou photoconducteur et apte à générer un photo-courant électrique en fonction des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101) et qu'il reçoit.

11. Dispositif suivant l'une quelconque des revendications précédentes, **caractérisé en ce que** la largeur à mi-hauteur de chacune des au moins deux raies spectrales (R1, R2, R3, R4, R5, R6) des au moins deux sources infrarouges (101) est inférieure ou égale à 1 µm.

12. Dispositif suivant l'une quelconque des revendications précédentes, **caractérisé en ce que** l'unité (2) de détermination du paramètre caractéristique du matériau polymère (M) comporte au moins un filtre ou circuit ou unité de filtrage (11) pour la suppression ou l'atténuation d'une composante continue dans un signal, ayant été fourni par le détecteur infrarouge (102) à partir des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101).

13. Dispositif suivant la revendication 12, **caractérisé en ce que** l'unité (2) de détermination du paramètre caractéristique du matériau polymère (M) comporte un amplificateur (10) pour amplifier le signal filtré en aval du filtre ou circuit ou unité de filtrage (11), un convertisseur analogique-numérique (5) en aval de l'amplificateur (10) et des moyens (107) de traitement et de stockage de données, pour déterminer le paramètre caractéristique du matériau polymère à partir du ou des signaux numérique(s) fourni(s) par le convertisseur analogique-numérique (5).

14. Dispositif suivant l'une quelconque des revendications précédentes, **caractérisé en ce que** l'unité (2) de détermination est configurée pour calculer le paramètre caractéristique du matériau polymère (M) en fonction au moins de l'amplitude d'un signal de détection obtenu à partir du détecteur infrarouge (102) et à partir des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101) et qui sont reçues par le détecteur infrarouge (102).

15. Dispositif suivant l'une quelconque des revendications précédentes, **caractérisé en ce que** l'unité (2) de détermination est configurée pour calculer le paramètre caractéristique du matériau polymère (M) en fonction de l'amplitude d'un signal de détection obtenu à partir du détecteur infrarouge (102) et à partir des au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101) et qui sont reçues par le détecteur infrarouge (102), par rapport à l'amplitude d'un signal d'émission servant à commander les au moins deux sources infrarouges (101) pour émettre les au moins deux raies spectrales (R1, R2, R3, R4, R5, R6).

16. Dispositif suivant l'une quelconque des revendications précédentes, **caractérisé en ce que** le dispositif (1) comporte un module (13) de refroidissement, pour refroidir le au moins un détecteur infrarouge (102) et/ou un module (13') de refroidissement, pour refroidir les au moins deux sources infrarouges (101).

17. Dispositif suivant la revendication 16, **caractérisé en ce que** le dispositif (1) comporte un thermostat et une unité électronique (9) de stabilisation automatique de température qui est reliée au module (13, 13') de refroidissement, pour maintenir le au moins un détecteur infrarouge (102) et/ou les au moins deux sources infrarouges (101) à une température prescrite par le thermostat.

18. Dispositif suivant l'une quelconque des revendications précédentes, **caractérisé en ce que** le dispositif (1) a la forme d'un pistolet (100) comportant un manche (14) de préhension raccordé à un module (15) de visée comportant à une extrémité avant (16) éloignée du manche (15) les au moins deuxsources infrarouges (101) et le au moins un détecteur infrarouge (102), le pistolet (100) comportant au moins un organe (103) de commande manuelle pour déclencher l'émission des au moins deux raies spectrales (R1, R2, R3, R4, R5, R6) par les au moins deux sources infrarouges (101), l'organe (103) de commande manuelle se trouvant près d'une zone (17) du pistolet (100) raccordant le manche (14) au module (15) de visée.

19. Dispositif suivant l'une quelconque des revendications précédentes, **caractérisé en ce que** les au moins deux sources (101) et/ou le au moins un détecteur infrarouge (102) sont recouverts par au moins un bloc extérieur (1011),
les au moins deux sources (101) étant aptea à émettre les au moins deux raies spectrales (R1, R2, R3, R4, R5, R6) et le au moins un détecteur infrarouge (102) étant apte à recevoir les au moins deux raies spectrales (R1, R2, R3, R4, R5, R6), qui sont réfléchies par le matériau polymère (M) en réponse aux au moins deux raies spectrales (R1, R2, R3, R4, R5, R6) ayant été émises par les au moins deux sources infrarouges (101), au travers du bloc extérieur (1011) qui est transparent à ceux-ci et qui est tourné vers le matériau polymère (M).

20. Dispositif suivant la revendication 19, **caractérisé en ce que** le dispositif (1) comporte une garde (110) d'appui contre le matériau polymère (M),
le bloc extérieur (1011) ayant une surface distale extérieure (1013), qui est à la fois orientée vers le matériau polymère (M) et qui est en retrait par rapport à une surface distale extérieure (113) de la garde (110), également tournée vers la surface (200) du matériau polymère (M).

21. Procédé d'estimation d'au moins un paramètre caractéristique d'un matériau polymère (M), par au moins une source infrarouge (101) et par au moins un détecteur infrarouge (102), la au moins une source infrarouge (101) étant au moins une diode électroluminescente infrarouge ou au moins une source laser,
**caractérisé en ce que**
il est prévu comme source infrarouge au moins deux sources infrarouges (101),
on émet par les au moins deux sources infrarouges (101) vers le matériau polymère respectivement au moins deux raies spectrales (R1, R2, R3, R4, R5, R6) différentes, représentant chacune une énergie d'émission maximale, choisies en respectivement deux différentes des longueurs d'onde 10 µm, 9.5 µm, 7.2 µm, 6 µm, 3.5 µm, 2.7 µm ou en respectivement deux différentes des nombres d'onde 1000 cm⁻¹, 1050 cm⁻¹, 1350 cm⁻¹, 1700 cm⁻¹, 2900 cm⁻¹, 3700 cm⁻¹,
on reçoit par le au moins un détecteur infrarouge (102) les au moins deux raies spectrales (R1, R2, R3, R4, R5, R6), qui sont réfléchies par le matériau polymère (M) en réponse aux au moins deux raies spectrales (R1, R2, R3, R4, R5, R6), ayant été émises par les au moins deux sources infrarouges (101),
on détermine par une unité (2) de détermination le paramètre caractéristique du matériau polymère (M) en fonction de l'énergie présente en lesdites au moins deux raies spectrales (R1, R2, R3, R4, R5, R6) ), ayant été réfléchies par le matériau polymère (M) et ayant été reçues par le détecteur infrarouge (102) en réponse aux au moins deux raies spectrales (R1, R2, R3, R4, R5, R6) ayant été émises par les au moins deux sources infrarouges (101).

## Patentansprüche

1. Tragbare Vorrichtung (1) zur Schätzung mindestens eines charakteristischen Parameters eines Polymermaterials, wobei die Vorrichtung Folgendes umfasst:
mindestens eine Infrarotquelle (101), wobei die mindestens eine Infrarotquelle (101) mindestens eine Infrarot-Leuchtdiode oder mindestens eine Laserquelle ist,
mindestens einen Infrarotdetektor (102),
**dadurch gekennzeichnet, dass**
als Infrarotquelle mindestens zwei Infrarotquellen (101) vorgesehen sind, die geeignet sind, jeweils mindestens zwei unterschiedliche Spektrallinien (R1, R2, R3, R4, R5, R6) hin zu dem Polymermaterial zu emittieren, die jeweils eine maximale Emissionsenergie darstellen und die aus jeweils zwei unterschiedlichen von den Wellenlängen 10 µm, 9,5 µm, 7,2 µm, 6 µm, 3,5 µm, 2,7 µm oder aus jeweils zwei unterschiedlichen von den Wellenzahlen 1000 cm⁻¹, 1050 cm⁻¹, 1350 cm⁻¹, 1700 cm⁻¹, 2900 cm⁻¹, 3700 cm⁻¹ ausgewählt sind,
wobei der mindestens eine Infrarotdetektor (102) geeignet ist, die mindestens zwei Spektrallinien (R1, R2, R3, R4, R5, R6) zu empfangen, die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden,
die Vorrichtung eine Einheit (2) zur Bestimmung des charakteristischen Parameters des Polymermaterials (M) in Abhängigkeit von der in den mindestens zwei Spektrallinien (R1, R2, R3, R4, R5, R6) vorhandenen Energie umfasst, die durch das Polymermaterial (M) reflektiert wurden und durch den Infrarotdetektor (102) als Reaktion auf die mindestens zwei Spektrallinien (R1, R2, R3, R4, R5, R6) empfangen wurden, die durch die mindestens zwei Infrarotquellen (101) emittiert wurden.

2. Vorrichtung nach Anspruch 1, **dadurch gekennzeichnet, dass** jede der mindestens zwei Spektrallinien (R1, R2, R3, R4, R5, R6) ein schmales Emissionsband aufweist.

3. Vorrichtung nach Anspruch 1, **dadurch gekennzeichnet, dass** der charakteristische Parameter des Polymermaterials (M) das Vorhandensein und/oder der Gehalt mindestens eines Alterungsindikators in dem Polymermaterial ist.

4. Vorrichtung nach einem der vorhergehenden Ansprüche, **dadurch gekennzeichnet, dass** jede Infrarotquelle (101) geeignet ist, die Spektrallinie (R1, R2, R3, R4, R5, R6) in der Form eines oder mehrerer Zeitimpulse (i, i+1, i+2) hin zu dem Polymermaterial (M) zu emittieren.

5. Vorrichtung nach Anspruch 4, **dadurch gekennzeichnet, dass** der oder die Zeitimpuls/e (i, i+1, i+2) rechteckig sind.

6. Vorrichtung nach Anspruch 4 oder 5, **dadurch gekennzeichnet, dass** Steuerungsmittel zum Inbetriebsetzen des mindestens einen Infrarotdetektors (102) auf eine synchrone Weise mit dem oder den Zeitimpuls/en (i, i+1, i+2) vorgesehen ist.

7. Vorrichtung nach einem der Ansprüche 4 bis 6, **dadurch gekennzeichnet, dass** die Vorrichtung (1) ein Steuerungsmittel (21) zum Durchführen mehrerer erster Messungen (300) der mindestens zwei Spektrallinien (R1, R2, R3, R4, R5, R6), die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden, während einer ersten vorgeschriebenen Zeitbreite (*γ*_{*i*1}), die gleich einer entsprechenden Zeitbreite (*τᵢ*) mindestens eines der Impulse (i) oder darin enthalten ist, umfasst, um eine Schätzung eines ersten Werts (*M̂_{i-ON}* ) zu berechnen, der für die erste Messungen (300) repräsentativ ist, wobei der Parameter ausgehend von mindestens dem ersten Wert (M̂*_{i-ON}*) berechnet wird.

8. Vorrichtung nach Anspruch 7, **dadurch gekennzeichnet, dass** die Vorrichtung (1) ein Steuerungsmittel (21) zum Durchführen mehrerer zweiter Messungen (301) der mindestens zwei Spektrallinien (R1, R2, R3, R4, R5, R6), die durch das Polymermaterial (M) als Reaktion auf die mindestens zwei Spektrallinien (R1, R2, R3, R4, R5, R6) reflektiert werden, welche durch die mindestens zwei Infrarotquellen (101) emittiert wurden, während einer zweiten vorgeschriebenen Zeitbreite (*γ*_{*i*2}), die gleich einer entsprechenden Zeitbreite (*Tᵢ₋τᵢ* )zwischen zwei aufeinanderfolgenden Impulsen (i, i+1) oder darin enthalten ist, umfasst, um eine Schätzung eines zweiten Werts (*M̂_{i-OFF}*) zu berechnen, der für zweite Messungen (301) repräsentativ ist, wobei der Parameter mindestens ausgehend von der Differenz zwischen dem ersten Wert (*M̂_{i-ON}*) und dem zweiten Wert (*M̂_{i-OFF}*) berechnet wird.

9. Vorrichtung nach einem der vorhergehenden Ansprüche, **dadurch gekennzeichnet, dass** die Vorrichtung (1) ferner mindestens ein manuelles Steuerungsorgan (103) umfasst, um die Emission der mindestens zwei Spektrallinien (R1, R2, R3, R4, R5, R6) durch die mindestens zwei Infrarotquellen (101) auszulösen.

10. Vorrichtung nach einem der vorhergehenden Ansprüche, **dadurch gekennzeichnet, dass** der mindestens eine Infrarotdetektor (102) vom Typ Photodiode oder Photoleiter und geeignet ist, einen elektrischen Photostrom in Abhängigkeit von den mindestens zwei Spektrallinien (R1, R2, R3, R4, R5, R6) zu erzeugen, die durch das Polymermaterial (M) als Reaktion auf die mindestens zwei Spektrallinien (R1, R2, R3, R4, R5, R6) reflektiert werden, die durch die mindestens zwei Infratotquellen emittiert wurden (101) und die er empfängt.

11. Vorrichtung nach einem der vorhergehenden Ansprüche, **dadurch gekennzeichnet, dass** die Breite von jeder der mindestens zwei Spektrallinien (R1, R2, R3, R4, R5, R6) der mindestens zwei Infrarotquellen (101) auf halber Höhe kleiner oder gleich 1 µm ist.

12. Vorrichtung nach einem der vorhergehenden Ansprüche, **dadurch gekennzeichnet, dass** die Einheit (2) zur Bestimmung des charakteristischen Parameters des Polymermaterials (M) mindestens ein Filter oder eine Filterschaltung- oder Einheit (11) für die Unterdrückung oder die Dämpfung einer kontinuierlichen Komponente in einem Signal umfasst, das durch den Infrarotdetektor (102) ausgehend von den mindestens zwei Spektrallinien (R1, R2, R3, R4, R5, R6) geliefert wurde, die durch das Polymermaterial (M) als Reaktion auf die mindestens zwei Spektrallinien (R1, R2, R3, R4, R5, R6) reflektiert werden, die von den mindestens zwei Infrarotquellen (101) emittiert wurden.

13. Vorrichtung nach Anspruch 12, **dadurch gekennzeichnet, dass** die Einheit (2) zur Bestimmung des charakteristischen Parameters des Polymermaterials (M) einen Verstärker (10) zum Verstärken des gefilterten Signals dem Filter oder der Filterschaltung oder - einheit (11) nachgelagert, einen Analog-Digital-Wandler (5) dem Verstärker (10) nachgelagert und Datenverarbeitungs- und Speicherungsmittel (107) umfasst, um den charakteristischen Parameter des Polymermaterials ausgehend von dem oder den durch den Analog-Digital-Wandler (5) gelieferten digitalen Signal/en zu bestimmen.

14. Vorrichtung nach einem der vorhergehenden Ansprüche, **dadurch gekennzeichnet, dass** die Bestimmungseinheit (2) dazu ausgestaltet ist, den charakteristischen Parameter des Polymermaterials (M) in Abhängigkeit von mindestens der Amplitude eines Detektionssignals zu berechnen, das ausgehend von dem Infrarotdetektor (102) und ausgehend von den mindestens zwei Spektrallinien (R1, R2, R3, R4, R5, R6) erhalten wird, die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden und die durch den Infrarotdetektor (102) empfangen werden.

15. Vorrichtung nach einem der vorhergehenden Ansprüche, **dadurch gekennzeichnet, dass** die Bestimmungseinheit (2) dazu ausgestaltet ist, den charakteristischen Parameter des Polymermaterials (M) in Abhängigkeit von der Amplitude eines Detektionssignals, das ausgehend von dem Infrarotdetektor (102) und ausgehend von den mindestens zwei Spektrallinien (R1, R2, R3, R4, R5, R6) erhalten wird, die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden und die durch den Infrarotdetektor (102) empfangen werden, in Bezug auf die Amplitude eines Emissionssignals zu berechnen, das zum Steuern der mindestens zwei Infrarotquellen (101) zum Emittieren der mindestens zwei Spektrallinien (R1, R2, R3, R4, R5, R6) dient.

16. Vorrichtung nach einem der vorhergehenden Ansprüche, **dadurch gekennzeichnet, dass** die Vorrichtung (1) ein Kühlmodul (13) zum Kühlen des mindestens einen Infrarotdetektors (102) und/oder ein Kühlmodul (13') zum Kühlen der mindestens zwei Infrarotquellen (101) umfasst.

17. Vorrichtung nach Anspruch 16, **dadurch gekennzeichnet, dass** die Vorrichtung (1) ein Thermostat und eine automatische elektronische Temperaturstabilisierungseinheit (9) umfasst, die mit dem Kühlmodul (13, 13') verbunden ist, um den mindestens einen Infrarotdetektor (102) und/oder die mindestens zwei Infrarotquellen (101) auf einer durch das Thermostat vorgeschriebenen Temperatur zu halten.

18. Vorrichtung nach einem der vorhergehenden Ansprüche, **dadurch gekennzeichnet, dass** die Vorrichtung (1) die Form einer Pistole (100) aufweist, die einen Haltegriff (14) umfasst, der mit einem Zielmodul (15) verbunden ist, das an einem vorderen Ende (16), das von dem Griff (15) entfernt ist, die mindestens zwei Infrarotquellen (101) und den mindestens einen Infrarotdetektor (102) umfasst, wobei die Pistole (100) mindestens ein manuelles Steuerungsorgan (103) zum Auslösen der Emission der mindestens zwei Spektrallinien (R1, R2, R3, R4, R5, R6) durch die mindestens zwei Infrarotquellen (101) umfasst, wobei das manuelle Steuerorgan (103) sich nahe an einer Zone (17) der Pistole (100) befindet, die den Griff (14) mit dem Zielmodul (15) verbindet.

19. Vorrichtung nach einem der vorhergehenden Ansprüche, **dadurch gekennzeichnet, dass** die mindestens zwei Quellen (101) und/oder der mindestens eine Infrarotdetektor (102) durch mindestens einen äußeren Block (1011) bedeckt sind,
die mindestens zwei Quellen (101) geeignet sind, die mindestens zwei Spektrallinien (R1, R2, R3, R4, R5, R6) zu emittieren, und der mindestens eine Infrarotdetektor (102) geeignet ist, die mindestens zwei Spektrallinien (R1, R2, R3, R4, R5, R6), die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden, durch den äußeren Block (1011) zu empfangen, der ihnen gegenüber durchlässig ist und der dem Polymermaterial (M) zugewandt ist.

20. Vorrichtung nach Anspruch 19, **dadurch gekennzeichnet, dass** die Vorrichtung (1) einen Schutz (110) vor der Auflage gegen das Polymermaterial (M) umfasst,
wobei der äußere Block (1011) eine äußere distale Oberfläche (1013) aufweist, die gleichzeitig hin zu dem Polymermaterial (M) ausgerichtet ist und die in Bezug auf eine äußere distale Oberfläche (113) des Schutzes (110) vertieft ist und auch der Oberfläche (200) des Polymermaterials (M) zugewandt ist.

21. Verfahren zur Schätzung mindestens eines charakteristischen Parameters eines Polymermaterials (M) durch mindestens eine Infrarotquelle (101) und durch mindestens einen Infrarotdetektor (102), wobei die mindestens eine Infrarotquelle (101) mindestens eine Infrarot-Leuchtdiode oder mindestens eine Laserquelle ist,
**dadurch gekennzeichnet, dass**
als Infrarotquelle mindestens zwei Infrarotquellen (101) vorgesehen sind,
durch die mindestens zwei Infrarotquellen (101) hin zum Polymermaterial jeweils mindestens zwei unterschiedliche Spektrallinien (R1, R2, R3, R4, R5, R6) emittiert werden, die jeweils eine maximale Emissionsenergie darstellen und die aus jeweils zwei unterschiedlichen von den Wellenlängen 10 µm, 9,5 µm, 7,2 µm, 6 µm, 3,5 µm, 2,7 µm oder aus jeweils zwei unterschiedlichen von den Wellenzahlen 1000 cm⁻¹, 1050 cm⁻¹, 1350 cm⁻¹, 1700 cm⁻¹, 2900 cm⁻¹, 3700 cm⁻¹ ausgewählt werden,
durch den mindestens einen Infrarotdetektor (102) die mindestens zwei Spektrallinien (R1, R2, R3, R4, R5, R6) empfangen werden, die durch das Polymermaterial (M) als Reaktion auf die mindestens zwei Spektrallinien (R1, R2, R3, R4, R5, R6) reflektiert werden, die durch die mindestens zwei Infrarotquellen (101) emittiert wurden,
durch eine Bestimmungseinheit (2) der charakteristische Parameter des Polymermaterials (M) in Abhängigkeit von der Energie bestimmt wird, die in den mindestens zwei Spektrallinien (R1, R2, R3, R4, R5, R6) vorhanden ist, die durch das Polymermaterial (M) reflektiert wurden und durch den Infrarotdetektor (102) als Reaktion auf die mindestens zwei Spektrallinien (R1, R2, R3, R4, R5, R6) empfangen wurden, die durch die mindestens zwei Infrarotquellen (101) emittiert wurden.

## Claims

1. A portable device (1) for estimating at least one parameter characteristic of a polymer material, **characterized in that** the device comprises:
at least one infrared source (101), the at least one infrared source (101) being at least one infrared light-emitting diode or at least one laser source,
at least one infrared detector (102),
**characterized in that**
it is provided as infrared source at least two infrared sources (101), which are capable of emitting towards the polymer material respectively at least two different spectral lines (R1, R2, R3, R4, R5, R6), representing each a maximum emission energy, selected in respectively at least two different of the wavelengths 10 µm, 9.5 µm, 7.2 µm, 6 µm, 3.5 µm, 2.7 µm or in respectively at least two different of the wave numbers 1000 cm⁻¹, 1050 cm⁻¹, 1350 cm⁻¹, 1700 cm⁻¹, 2900 cm⁻¹, 3700 cm⁻¹,
the at least one infrared detector (102) is capable of receiving the at least two spectral lines (R1, R2, R3, R4, R5, R6), which are reflected by the polymer material (M) in response to the at least two spectral lines (R1, R2, R3, R4, R5, R6), having been emitted by the at least two infrared sources (101),
the device comprising a determination unit (2) for determining the parameter characteristic of the polymer material (M) as a function of the energy present in the at least two spectral lines (R1, R2, R3, R4, R5, R6), having been reflected by the polymer material (M) and having been received by the infrared detector (102) in response to the at least two spectral lines (R1, R2, R3, R4, R5, R6) having been emitted by the at least two infrared sources (101).

2. The device according to claim 1, **characterized in that** each of the at least two spectral lines (R1, R2, R3, R4, R5, R6) is narrowband of emission.

3. The device according to claim 1, **characterized in that** the parameter characteristic of the polymer material (M) is the presence and/or content of at least one ageing tracer in the polymer material.

4. The device according to any one of the preceding claims, **characterized in that** each infrared source (101) is capable of emitting towards the polymer material (M) the spectral line (R1, R2, R3, R4, R5, R6) in the form of one or more time pulses (i, i+1, i+2).

5. The device according to claim 4, **characterized in that** the time pulse(s) (i, i+1, i+2) are rectangular.

6. The device according to claim 4 or 5, **characterized in that** control means are provided for starting the at least one infrared detector (102) synchronously with the time pulse(s) (i, i+1, i+2).

7. The device according to any one of claims 4 to 6, **characterized in that** the device (1) comprises a control means (21) for taking several first measurements (300) of the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101), over a first prescribed time width (γᵢ₁) comprised in or equal to a respective time width (τᵢ) of at least one of the pulses (i), to calculate an estimation of a first value (*M̂_{i-ON}*) representative of the first measurements (300), the parameter being calculated from at least the first value *(M̂_{i-ON}* ).

8. The device according to claim 7, **characterized in that** the device (1) comprises a control means (21) for taking several second measurements (301) of the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101), over a second prescribed time width (γᵢ₂) comprised in or equal to a respective time width (Tᵢ-τᵢ) between two successive pulses (i, i+1), to calculate an estimation of a second value ( *M̂_{i-OFF}*) representative of the second measurements (301), the parameter being calculated at least from the difference between the first value (*M̂_{i-ON}*) and the second value (*M̂_{i-OFF}*)*.*

9. The device according to any one of the preceding claims, **characterized in that** the device (1) further comprises at least one manual control member (103) for triggering the emission of the at least two spectral lines (R1, R2, R3, R4, R5, R6) by the at least two infrared sources (101).

10. The device according to any one of the preceding claims, **characterized in that** the at least one infrared detector (102) is of photodiode or photoconductor type and is capable of generating an electrical photocurrent as a function of the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101) and which it receives.

11. The device according to any one of the preceding claims, **characterized in that** the width at half height of each of the at least two spectral lines (R1, R2, R3, R4, R5, R6) of the at least two infrared sources (101) is less than or equal to 1 µm.

12. The device according to any one of the preceding claims, **characterized in that** the unit (2) for determining the parameter characteristic of the polymer material (M) comprises at least one filter or circuit or filtering unit (11) for suppression or attenuation of a continuous component in a signal, having been provided by the infrared detector (102) from the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101).

13. The device according to claim 12, **characterized in that** the unit (2) for determining the parameter characteristic of the polymer material (M) comprises an amplifier (10) for amplifying the filtered signal downstream from the filter or circuit or filtering unit (11), an analog-to-digital converter (5) downstream from the amplifier (10) and means (107) for processing and storing data, to determine the parameter characteristic of the polymer material from the digital signal(s) provided by the analog-to-digital converter (5).

14. The device according to any one of the preceding claims, **characterized in that** the determination unit (2) is configured to calculate the parameter characteristic of the polymer material (M) as a function at least of the amplitude of a detection signal obtained from the infrared detector (102) and from the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101) and which are received by the infrared detector (102).

15. The device according to any one of the preceding claims, **characterized in that** the determination unit (2) is configured to calculate the parameter characteristic of the polymer material (M) as a function of the amplitude of a detection signal obtained from the infrared detector (102) and from the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101) and which are received by the infrared detector (102), relative to the amplitude of an emission signal serving to control the at least two infrared sources (101) to emit the at least two spectral lines (R1, R2, R3, R4, R5, R6).

16. The device according to any one of the preceding claims, **characterized in that** the device (1) comprises a cooling module (13), for cooling the at least one infrared detector (102) and/or a cooling module (13'), for cooling the at least two infrared sources (101).

17. The device according to claim 16, **characterized in that** the device (1) comprises a thermostat and an electronic unit (9) for automatic temperature stabilization which is connected to the cooling module (13, 13'), for maintaining the at least one infrared detector (102) and/or the at least two infrared sources (101) at a temperature prescribed by the thermostat.

18. The device according to any one of the preceding claims, **characterized in that** the device (1) has the shape of a pistol (100) comprising a grip handle (14) attached to a sighting module (15) comprising at a front end (16) away from the handle (15) the at least two infrared sources (101) and the at least one infrared detector (102), the pistol (100) comprising at least one manual control member (103) for triggering emission of the at least two spectral lines (R1, R2, R3, R4, R5, R6) by the at least two infrared sources (101), wherein the manual control member (103) is located near a zone (17) of the pistol (100) connecting the handle (14) to the sighting module (15).

19. The device according to any one of the preceding claims, **characterized in that** the at least two sources (101) and/or the at least one infrared detector (102) are covered by at least one external block (1011),
the at least two sources (101) being capable of emitting the at least two spectral lines (R1, R2, R3, R4, R5, R6) and the at least one infrared detector (102) being capable of receiving the at least two spectral lines (R1, R2, R3, R4, R5, R6), which are reflected by the polymer material (M) in response to the at least two spectral lines (R1, R2, R3, R4, R5, R6) having been emitted by the at least two infrared sources (101), through the external block (1011) which is transparent to the latter and which is turned towards the polymer material (M).

20. The device according to claim 19, **characterized in that** the device (1) comprises a support guard (110) against the polymer material (M),
the external block (1011) having an external distal surface (1013), which is at the same time oriented towards the polymer material (M) and which is retracted relative to an external distal surface (113) of the guard (110), also turned towards the surface (200) of the polymer material (M).

21. A method for estimating at least one parameter characteristic of a polymer material (M), by at least one infrared source (101) and by at least one infrared detector (102), the at least one infrared source (101) being at least one infrared light-emitting diode or at least one laser source,
**characterized in that**
it is provided as infrared source at least two infrared sources (101),
respectively at least two different spectral lines (R1, R2, R3, R4, R5, R6), representing each a maximum emission energy, selected in respectively two different of the wavelengths 10 µm, 9.5 µm, 7.2 µm, 6 µm, 3.5 µm, 2.7 µm or in respectively two different of the wave numbers 1000 cm⁻¹, 1050 cm⁻¹, 1350 cm⁻¹, 1700 cm⁻¹, 2900 cm⁻¹, 3700 cm⁻¹, are emitted by at least two infrared sources (101) towards the polymer material,
the at least two spectral lines (R1, R2, R3, R4, R5, R6), which are reflected by the polymer material (M) in response to the at least two spectral lines (R1, R2, R3, R4, R5, R6), having been emitted by the at least two infrared sources (101), are received by at least one infrared detector (102),
the parameter characteristic of the polymer material (M) is determined by a determination unit (2) as a function of the energy present in said at least two spectral lines (R1, R2, R3, R4, R5, R6), having been reflected by the polymer material (M) and having been received by the infrared detector (102) in response to the at least two spectral lines (R1, R2, R3, R4, R5, R6) having been emitted by the at least two infrared sources (101).
